# FASCICULE DE BREVET EUROPEEN

(11) **EP 1 733 868 B1**
(45) Date de publication et mention de la délivrance du brevet: **22.10.2008**
(21) Numéro de dépôt: 06114935.7
(22) Date de dépôt: 02.06.2006
(51) Int. Cl.: B29D 30/06

(54) **Dispositif et procédé de refroidissement d'un noyau**
Vorrichtung und Verfahren zum Kühlen eines Kerns
Device and process for cooling of a core

(30) Priorité: 17.06.2005 FR 0506243
(43) Date de publication de la demande: 20.12.2006
(73) Titulaire: Société de Technologie Michelin, 63000 Clermont-Ferrand (FR); Michelin Recherche et Technique, 1763 Granges-Paccot (CH)
(72) Inventeur: Cordaillat, Dominique, 69126 Brindas (FR); Beciu, Stéphane, 69520 Grigny (FR); Vaillant, Christian, Greenville, SC South Carolina 29615 (US)
(74) Mandataire: Lasson, Cédric Y. M.

(56) Documents cités:
- EP-A- 0 666 165
- DE-A1- 4 341 808
- DE-C1- 19 533 392
- FR-A- 2 079 656

## Description

L'invention concerne la fabrication de pneumatiques destinés à équiper les véhicules et plus particulièrement l'agencement d'une machine destinée à la fabrication desdits pneumatiques.

Il est connu de l'art antérieur, tel que décrit dans le brevet EP 0 666 165 B1, un procédé et une machine de fabrication dans laquelle l'agencement des postes de fabrication est simplifié, et dans lesquels l'ensemble des dispositifs servant à réaliser les étapes d'assemblage et de vulcanisation sont concentrés sur une même châssis servant de plateforme unique destinée à recevoir l'ensemble des éléments mécaniques de la machine.

Ce procédé de fabrication utilise un noyau démontable rigide imposant en partie sa forme au pneumatique. Le noyau est formé de plusieurs éléments séparables les uns des autres et constituant, une fois assemblés, une surface de révolution stable utilisée pour la fabrication d'un pneumatique, depuis l'assemblage où il sert de surface de référence pour la pose des différents constituants, jusqu'à la vulcanisation où il constitue le moule de la partie interne du pneumatique. Lorsqu'il est assemblé, le noyau peut être saisi par chacune des faces de sa partie centrale, formant une jante, de manière à pouvoir être transféré d'un poste à un autre.

La première étape du procédé consiste à assembler les éléments du noyau et à positionner ce dernier à un poste d'assemblage des composants du pneumatique. L'étape d'assemblage consiste à déposer successivement sur ledit noyau tous les constituants du pneumatique selon un ordre d'assemblage déterminé. L'ensemble est alors transféré vers un poste sur lequel les éléments de moulage externe viennent compléter le noyau, et introduit dans une enceinte de vulcanisation. Enfin, à l'issue de ladite étape de vulcanisation le moule externe et le noyau sont séparés du pneumatique et les éléments du noyau sont ré assemblés en vue du cycle suivant.

Il s'avère néanmoins que la température du noyau à l'issue de la phase de réassemblage peut être encore trop élevée pour permettre la dépose de produits caoutchoutiques sur sa surface. Il devient donc nécessaire de refroidir le noyau avant de le réacheminer vers un poste d'assemblage. Le moyen de refroidissement décrit dans le brevet EP 0 666 165 B1 consiste à placer le noyau dans une enceinte dans laquelle on fait circuler de l'air. D'autres procédés de refroidissment de la surface d'un pneumatique sont décrits dans les publications DE 195 33 392, FR 2 079 656 et concernent des dispositifs d'ébarbage à l'azote liquide ne convenant pas à la résolution du refroidissement d'une surface mécanique. Enfin, la publication DE 43 41 808 A1 s'intéresse à un dispositif d'ébarbage de la surface externe d'un pneumatique à l'aide de rouleaux concaves.

Outre le problème du bruit engendré par les turbulences de l'air, ce dispositif présente l'inconvénient de ne pas permettre le refroidissement du noyau suffisamment rapidement, ce qui peut être préjudiciable à l'optimisation des temps de cycle d'une machine de fabrication de pneumatiques telle que décrite dans le brevet cité ci-dessus.

L'invention a pour objet de proposer une solution au problème évoqué ci-dessus et qui consiste à effectuer le refroidissement par immersion dans un bac d'eau réfrigérée d'une partie de la surface du noyau, préalablement mis en rotation.

En combinant la vitesse de rotation du noyau, la profondeur d'immersion, la température de l'eau réfrigérée, il est possible, dans un temps relativement bref, d'abaisser la température de la surface du noyau à une température compatible avec la dépose des produits caoutchoutiques pendant la phase d'assemblage qui succède à la phase de refroidissement.

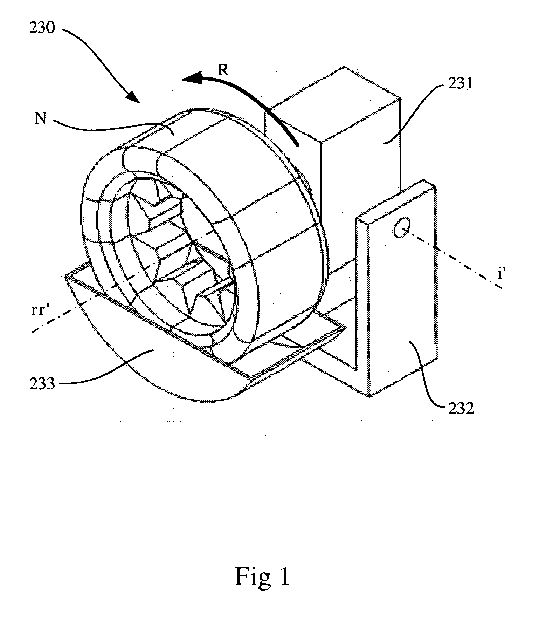

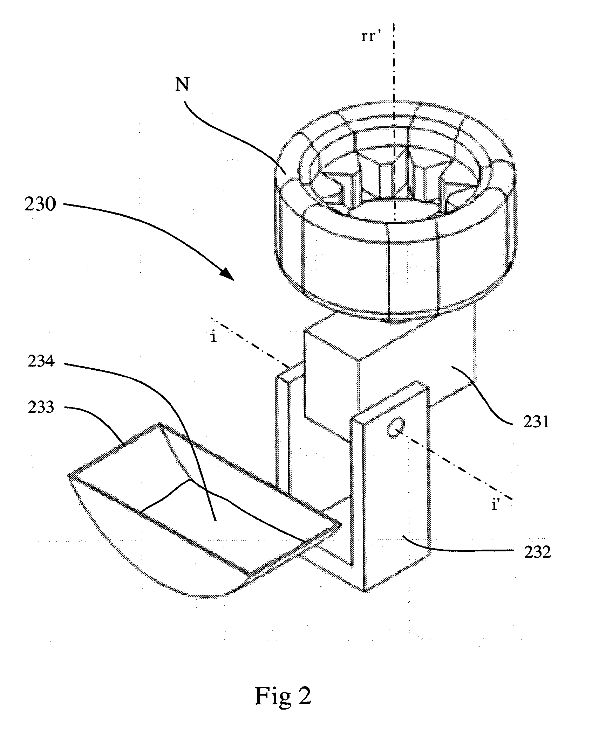

Les figures 1 et 2 servent de support et d'illustration à la description qui va suivre, en se basant sur un exemple de réalisation de machine conforme à l'invention, et dans lesquelles
- la figure 1 représente une vue en perspective schématisée d'un poste de refroidissement conforme à l'invention,
- la figure 2 représente une vue en perspective schématisée d'une configuration particulière d'utilisation.

Il est possible de se référer à la publication EP 1 075 928 pour obtenir, à titre non limitatif, la description détaillée d'un noyau rigide comportant une jante de solidarisation.

Le poste de refroidissement 230, dont le détail est donné sur la figure 1, comprend un bâti 232, supportant un moyen 231 de saisi, de maintien et de mise en rotation du noyau N autour de son axe de rotation rr'.

Un bac 233 contient un volume donné d'eau réfrigérée 234 dans lequel le noyau est partiellement immergé. En mettant le noyau en rotation suivant la direction de la flèche R on fait en sorte que l'ensemble de la surface du noyau soit immergée à chaque rotation. La fine pellicule d'eau déposée lors de l'immersion s'évapore lorsque la surface du noyau correspondante passe à l'air libre, ce qui a pour effet d'accélérer le transfert thermique.

En pratique la diminution de température de la surface du noyau que l'on cherche à obtenir en un temps relativement court est de l'ordre de 70°C à 100°C environ. Elle peut être réalisée en un temps inférieur à 5 minutes.

Pour ce faire, on choisit une vitesse circonférentielle de la surface comprise entre 2 et 5 m/s. La température de l'eau est avantageusement comprise entre 20°C et 50°C, et de préférence est comprise entre 25°C et 35°C. La profondeur d'immersion est comprise entre 10mm et 20 mm et peut aller jusqu'à 30mm selon le diamètre du noyau. Afin de ne pas altérer les pièces du noyau, l'eau contenue dans le bac est traitée de manière à éviter tout dépôt et toute attaque chimique.

Le choix des paramètres ci-dessus est déterminé en fonction de la température du noyau en fin de cuisson, du temps de cycle machine, et de la température de surface du noyau désirée en début du cycle d'assemblage et liée aux matériaux déposés pendant le cycle d'assemblage.

Le noyau peut se présenter au poste de refroidissement avec son axe de rotation disposé en position horizontale ou en position verticale. Dans le premier cas, il est nécessaire d'équiper le bâti 232 d'un moyen permettant d'abaisser ou de relever verticalement le noyau afin de l'immerger ou de le retirer du bac d'eau réfrigérée.

Dans le deuxième cas, il peut être avantageux d'articuler le moyen de maintien du noyau 231 sur le bâti 232 autour d'un axe ii' horizontal comme cela est représenté sur la figure 2. En faisant pivoter le moyen de maintien 231 autour de l'axe ii' il est alors possible de placer le noyau selon une première position dans laquelle l'axe de rotation rr' dudit noyau est vertical, et selon une deuxième position dans laquelle l'axe rr' du noyau est disposé horizontalement. Dans cette deuxième position on s'arrange pour que la surface externe du noyau soit partiellement immergée dans l'eau de réfrigération 234 contenue dans le bac 233.

Lorsque la température de la surface du noyau atteint la valeur désirée, le moyen de maintien 231 est relevé, ou effectue autour de l'axe ii' une rotation inverse à la précédente de 90° pour replacer l'axe rr' du noyau en position verticale.

Il est alors possible d'évacuer par centrifugation les gouttes demeurant à la surface du noyau en mettant le noyau en rotation à grande vitesse pendant quelques secondes. Une vitesse circonférentielle de la surface du noyau comprise entre 7 m/s et 10 m/s est suffisante pour évacuer les seules gouttes de grande taille. Il s'avère en effet intéressant de conserver à la surface du noyau les particules d'eau de plus petite taille qui s'évaporent pendant le temps de transfert du noyau vers le poste d'assemblage et permettent de prolonger la phase de refroidissement et de compenser les effets des transferts thermiques s'opérant entre la surface et le coeur du noyau pendant ce laps de temps tout en assurant que la surface du noyau est parfaitement sèche lorsque l'on procède à la dépose des produits d'assemblage.

On tiendra compte, pour la détermination des paramètres du cycle au poste de refroidissement, des écarts de température pouvant subsister entre la surface et le coeur du noyau, et susceptibles de provoquer une légère remontée de température de surface après la phase de refroidissement proprement dite. Cette phase d'homogénéisation des températures se produit pendant les temps de transfert du noyau depuis le poste de refroidissement vers le premier poste d'assemblage, de manière à obtenir une température stabilisée pendant la phase d'assemblage.

Ce mode de refroidissement est préféré en raison de la vitesse à laquelle il est possible de faire baisser la température du noyau sans créer de choc thermique. On remarquera en effet, que le fait de ne pas immerger totalement le noyau dans le bac à eau permet de maîtriser les déformations mécaniques des éléments du noyau.

La description du dispositif de refroidissement d'un noyau s'appui sur un agencement particulier de ce dispositif dans un ensemble complet de dispositifs destinés à l'assemblage et à la vulcanisation d'un pneumatique. Cette mise en oeuvre particulière n'est nullement limitative, et un dispositif conforme à l'invention peut être intégré à des configurations différentes.

## Revendications

1. Dispositif de refroidissement (230) d'un noyau (N) composé de plusieurs éléments démantelables, et formant, dans la configuration utilisée pour l'assemblage, une surface de révolution stable présentant une forme continue, proche de la forme finale de fabrication d'un pneumatique, ledit noyau étant utilisé comme surface de référence pour la fabrication dudit pneumatique du début de l'assemblage jusqu'à la vulcanisation, comprenant un moyen de saisie et de maintien du noyau et des moyens de mise en rotation du dit noyau autour de son axe rr' placé en position horizontale, dispositif **caractérisé en ce qu'**il comprend un bac (233) contenant de l'eau réfrigérée (234), et des moyens pour immerger une partie de la surface du noyau dans le bac.

2. Dispositif de refroidissement selon la revendication 1, dans lequel le moyen (231) de saisie et de maintien dudit noyau est apte à basculer autour d'un axe ii' de manière à faire passer l'axe de rotation rr' du noyau d'une position verticale vers une position horizontale et réciproquement.

3. Dispositif de refroidissement selon la revendication 1, dans lequel le moyen (231) de saisie et de maintien dudit noyau est apte à effectuer un mouvement vertical de monte et baisse.

4. Procédé de refroidissement d'un noyau (N) composé de plusieurs éléments démantelables, et formant, dans la configuration utilisée pour l'assemblage, une surface de révolution stable présentant une forme continue, proche de la forme finale de fabrication d'un pneumatique, ledit noyau étant utilisé comme surface de référence pour la fabrication dudit pneumatique du début de l'assemblage jusqu'à la vulcanisation, procédé **caractérisé en ce que** le refroidissement du noyau (N) est obtenu en mettant le noyau en rotation autour d'un axe horizontal rr' et en immergeant une partie de la surface dudit noyau dans de l'eau réfrigérée (234).

5. Procédé de refroidissement selon la revendication 4, dans lequel la température de l'eau contenue dans le bac est comprise entre 20°C et 50°C.

6. Procédé de refroidissement selon la revendication 4, dans lequel la température de l'eau contenue dans le bac est comprise entre 25°C et 35°C.

7. Procédé de refroidissement selon la revendication 4 dans lequel le noyau (N) subi une baisse de température comprise entre 70°C et 100°C.

8. Procédé de refroidissement selon la revendication 4, dans lequel la vitesse circonférentielle de la surface du noyau est comprise entre 2 et 5 m/s pendant la phase d'immersion.

9. Procédé de refroidissement selon la revendication 4 dans lequel, après la phase d'immersion, la vitesse de rotation du noyau est portée à une vitesse supérieure suffisante pour permettre l'évacuation sous l'action de la force centrifuge des gouttes d'eau demeurant sur sa surface.

10. Procédé de refroidissement selon la revendication 9 dans lequel la vitesse de rotation est ajustée pour autoriser l'évacuation des seules gouttes d'eau de grand diamètre.

11. Procédé de refroidissement selon la revendication 10, dans lequel la vitesse circonférentielle de la surface du noyau est comprise entre 7 et 10m/s.

## Claims

1. Device (230) for cooling a core (N) composed of plural elements capable of being dismantled and forming, in the configuration used for assembly, a stable surface of revolution having a continuous form, close to the final form of manufacture of a tyre, the core being used as a reference surface for the manufacture of a tyre from the start of assembly through to vulcanisation, comprising a means for grasping and holding the core and means for setting the core in rotation about its axis rr' placed in a horizontal position, the device being **characterised in that** it comprises a tub (233) for containing refrigerated water (234), and means of immersing part of the surface of the core in the tub.

2. Cooling device according to claim 1, wherein the means (231) for grasping and holding the core is capable of pivoting about an axis ii' in order to make the axis of rotation rr' of the core move from a vertical position to a horizontal position and vice versa.

3. Cooling device according to claim 1, wherein the means (231) for grasping and holding the core is capable of effecting a vertical up-and-down movement.

4. Process for cooling a core (N) composed of plural elements capable of being dismantled and forming, in the configuration used for assembly, a stable surface of revolution having a continuous form, close to the final form of manufacture of a tyre, the core being used as a reference surface for the manufacture of a tyre from the start of assembly through to vulcanisation, the process being **characterised in that** the cooling of the core (N) is obtained by setting the core in rotation about a horizontal axis rr' and by immersing part of the surface of the core in refrigerated water (234).

5. Cooling process according to claim 4, wherein the temperature of the water contained in the tube is between 20°C and 50°C.

6. Cooling process according to claim 4, wherein the temperature of the water contained in the tub is between 25°C and 35°C.

7. Cooling process according to claim 4, wherein the core (N) undergoes a reduction in temperature of between 70°C and 100°C.

8. Cooling process according to claim 4, wherein the circumferential speed of the surface of the core is between 2 and 5 m/s during the immersion stage.

9. Cooling process according to claim 4, wherein, after the immersion stage, the speed of rotation of the core is brought to a higher speed sufficient to permit the evacuation under centrifugal force of the drops of water remaining on its surface.

10. Cooling process according to claim 9, wherein the speed of rotation is adjusted in order to allow the evacuation only of large-diameter drops of water.

11. Cooling process according to claim 10, wherein the circumferential speed of the surface of the core is between 7 and 10 m/s.

## Patentansprüche

1. Vorrichtung zum Kühlen (230) eines Kerns (N), der aus mehreren auseinandernehmbaren Elementen zusammengesetzt ist und wobei er in der Konfiguration, die zum Zusammenbau benutzt wird, eine stabile Umdrehungsfläche bildet, die eine kontinuierliche Form aufweist, die der endgültigen Herstellungsform eines Reifens sehr nahe kommt, wobei der Kern als Bezugsoberfläche zur Herstellung des Reifens vom Anfang des Zusammenbaus bis hin zur Vulkanisierung benutzt wird, umfassend ein Mittel zum Ergreifen und zum Halten des Kerns und Mittel zum Versetzen des Kerns in Drehung um seine Achse rr', die in der horizontalen Position liegt, wobei die Vorrichtung **dadurch gekennzeichnet ist, dass** sie eine Schale (233), die gekühltes Wasser (234) enthält, und Mittel zum Eintauchen eines Teils der Oberfläche des Kerns in die Schale umfasst.

2. Vorrichtung zum Kühlen nach Anspruch 1, wobei das Mittel (231) zum Ergreifen und zum Halten des Kerns dazu fähig ist, derart um eine Achse ii' zu schaukeln, dass die Drehachse rr' des Kerns von einer vertikalen Position in eine horizontale Position übergeht und umgekehrt.

3. Vorrichtung zum Kühlen nach Anspruch 1, wobei das Mittel (231) zum Ergreifen und zum Halten des Kerns dazu fähig ist, eine vertikale Hebe- und Senkbewegung durchzuführen.

4. Verfahren zum Kühlen eines Kerns (N), der aus mehreren auseinandernehmbaren Elementen zusammengesetzt ist und wobei er in der Konfiguration, die zum Zusammenbau benutzt wird, eine stabile Umdrehungsfläche bildet, die eine kontinuierliche Form aufweist, die der endgültigen Herstellungsform eines Reifens nahe kommt, wobei der Kern als Bezugsoberfläche zur Herstellung des Reifens vom Anfang des Zusammenbaus bis hin zur Vulkanisierung benutzt wird, wobei das Verfahren **dadurch gekennzeichnet ist, dass** das Kühlen des Kerns (N) erreicht wird, indem der Kern um eine horizontale Achse rr' in Drehung versetzt wird und indem ein Teil der Oberfläche des Kerns in gekühltes Wasser (234) eingetaucht wird.

5. Verfahren zum Kühlen nach Anspruch 4, wobei die Temperatur des Wassers, das in der Schale enthalten ist, zwischen 20 °C und 50 °C liegt.

6. Verfahren zum Kühlen nach Anspruch 4, wobei die Temperatur des Wassers, das in der Schale enthalten ist, zwischen 25 °C und 35 °C liegt.

7. Verfahren zum Kühlen nach Anspruch 4, wobei der Kern (N) einen Temperaturabfall zwischen 70 °C und 100 °C erfährt.

8. Verfahren zum Kühlen nach Anspruch 4, wobei die Umfangsgeschwindigkeit der Oberfläche des Kerns während der Eintauchphase zwischen 2 und 5 m/s liegt.

9. Verfahren zum Kühlen nach Anspruch 4, wobei nach der Eintauchphase die Umfangsgeschwindigkeit des Kerns zu einer höheren Geschwindigkeit geführt wird, die ausreicht, um unter dem Einfluss der Zentrifugalkraft das Abfließen von Wassertropfen, die auf seiner Oberfläche befindlich sind, zu ermöglichen.

10. Verfahren zum Kühlen nach Anspruch 9, wobei die Drehgeschwindigkeit angepasst wird, um das Abfließen der einzigen Wassertropfen mit großem Durchmesser zuzulassen.

11. Verfahren zum Kühlen nach Anspruch 10, wobei die Umfangsgeschwindigkeit der Oberfläche des Kerns zwischen 7 und 10 m/s liegt.
